Europäisches Patentamt

European Patent Office

Office européen des brevets

(11) Publication number: **0 201 294 B1**

# EUROPEAN PATENT SPECIFICATION

(45) Date of publication of patent specification: **31.07.91**

(51) Int. Cl.⁵: **B41J 5/10**, B41J 5/14, B41J 1/00, G06F 3/02, G06C 7/02

(21) Application number: **86303353.6**

(22) Date of filing: **02.05.86**

(54) **Keyboard.**

(30) Priority: **07.05.85 US 731657**

(43) Date of publication of application:
**12.11.86 Bulletin 86/46**

(45) Publication of the grant of the patent:
**31.07.91 Bulletin 91/31**

(84) Designated Contracting States:
**AT BE CH DE FR GB IT LI LU NL SE**

(56) References cited:
**EP-A- 0 134 160**
**US-A- 4 244 659**

(73) Proprietor: **Fultun, Roy**
**234 San Vicente Suite 2**
**Santa Monica California 90402(US)**

(72) Inventor: **Fultun, Roy**
**234 San Vicente Suite 2**
**Santa Monica California 90402(US)**

(74) Representative: **Enskat, Michael Antony Frank et al**
**Michael A. Enskat & Co. 9, Rickmansworth Road**
**Watford Hertfordshire WD1 7HE(GB)**

## Description

This invention relates to input keyboards for devices capable of processing a combination of alphabetic, numeric, punctuational and control information and displaying that information dynamically in textual form suitable for reading by the operator. These devices include and are not limited to stand-alone computers, computer terminals, word processors, portable computers, mainframe, computers, multiuser computers, telecommunications terminals and lap-sized computers.

The standard typewriter keyboard, used in countries whose written alphabet is based on that of Latin, was invented in the late 1860s by Christopher Latham Sholes. The design is known as the QWERTY keyboard layout, after the sequence of characters in the upper row of letters.

Tyberg modified the Qwerty keyboard drastically, removing the staggering and arranging the keys in straight rows and columns. He split the keyboard into left and right halves, and placed the mechanical "control" keys in a single central thumb key pad located between and partially below the finger pads.

The Qwerty keyboard's problem of anti-mnemonic and ergonomically inefficient assignment of letters to keys was first addressed by Frank and Lilian Gilbreath, and was overcome satisfactorily in the design disclosed by Dvorak and Dealey. Based on the strategy of alternating keystrokes between the left and right hands, and on the fact that consonants and vowels alternate with high frequency in English, it assigns the vowels to the home positions of the left hand fingers and the more frequent consonants to the right hand home positions. The numerals are also arranged on an alternating plan, with the odd ones assigned to the left hand and the even ones to the right.

Einbinder breaks entirely with the Qwerty tradition and introduces designs involving the assignment of letters to keys struck by all ten digits including the thumbs, to which they assign multiple letters. These designs constitute significant refinements and extensions of Dvorak and Dealey's contributions. Like Tyberg, they split the keyboard into halves for the left and right hands.

Malt's stated strategy is to place the most frequent characters on keys operated by the strongest fingers and arrange the keys as a totality so that the most frequently occurring consecutive characters are operated by different fingers. This approach is finger oriented rather than hand-oriented, as Dvorak's is; it still resembles the latter. Like Einbinder's, Malt's design has two separate finger key pads and two separate thumb key pads, but the keys of each finger key pad are arranged in cavities convex in two dimensions, that is, about two axes.

The keyboard of IBM 029 keypunch may have been the first to overlay the numeric keys over the alphabetic keys and to include a numeric shift key.

The NEC PWP-100 is a keyboard design for the Japanese language, intended for word-processing use based on Romanji characters. Like Tyberg, it splits the keyboard into left and right hand halves. In the style of the IBM 029 keypunch, the numerals are assigned to a right hand unilaterally balanced ten-key numeric keypad overlying the alphabetic fase. Rather than dedicating fases to distinct functions, this keyboard dedicates a central keypad to cursor motion and command function, and distributes a large number of command keys around the periphery of the finger keypads.

The premier need that prior art has not addressed is that of transparency. That is, there is a need for keyboards which provide the user with maximum functional capability while distracting none of his attention to themselves. For typewriters, which have no cursors, this is not a problem, and designs such as the Dvorak and the Einbinder keyboards serve this arena well.

However, it is impossible to operate any currently available keyboard which supports alphabetic entry, numeric entry, cursor motion entry and deletion control entry without having a considerable amount of attention on it, that is, on the keyboard. The ability to support a broad spectrum of tasks transparently is another aspect that has not been addressed adequately by prior art.

All current keyboards have either separate cursor or numeric keypads, or have overlaid them on the standard staggered Qwerty finger key pads. Neither arrangement allows operation of keys in these two fases without finger distraction, eye distraction, or both.

The use of (control) key for fase selection, struck by the left little finger entails the distraction of the little and ring fingers from their home positions.

With the advent of the computer and its dynamic, high-resolution character and graphics display capability, an opportunity has arisen to transcend the limitations of discrete, character-oriented input. Current software has been written to take advantage of the opportunity, which has been primarily oriented to the mouse or the grid.

These devices are separate from the keyboard and their use consequently entails hand and eye distraction.

US Patent Number 4 244 659 discloses a typewriter keyboard arranged to take into account the frequency of occurance of letters so that the keys for the most frequently occuring letters are postioned easiest for the typist. Account is also taken of frequency of occurance of consecutive letters so that one finger or thumb will not have to operate keys in rapid succession. The keyboard further includes keys to form letters or functional operations by the thumb. In one embodiment two pluralities of keys are provided for operation by fingers of the left and right hands respectively and two further pluralities of keys are provided for operation by the right and left thumbs respectively. Each of the four pluralities of keys is arranged on a surface which is concave in two orthogonal directions.

It is an object of the invention to provide an improved keyboard.

The following definitions, examples and discussion are presented in order to precisely define this invention and to provide a conceptual framework on which to base that definition.

## Input Keyboards

An input keyboard may be defined as an array of keys operated by the digits of the hands to select characters and control codes, encode the selections, and transmit the encoded selections to a machine capable of receiving them.

## Video Display Units

Dynamic display may be defined as the display of a potentially unlimited stream of information, such as text and actions based on control information, in a visible fashion on a finite, pre-bounded medium. This display may include, but is not limited to, media such as fluorescent screens (cathode ray tubes) and liquid crystal displays.

A video display unit is a dynamic display device. The prime example resembles a television set on which text is displayed.

## Keys and Keypads

A key is said to be activated when it is stroked, pressed, struck, touched or otherwise stimulated in such a way as to cause the keyboard to emit an encoded character. These terms will be used synonymously.

A key pad is a set of keys grouped together is some fashion. The following definitions contain several distinctions which can be made about keypads. In addition, they contain several related distinction converning fonts and cases of characters.

Virtual key pads are abstract arrangements of keys considered not from the point of view of physical layout or function, but considered only from the following points of view:
- the assignment of one- or two-dimensional integer coordinates to the keys
- which digits of the hands can press the keys. This disclosure is concerned solely with designs in which each key is activated by only one digit.

Mathematically, a virtual key mapping is many-to-one mapping from a set of keys, represented by coordinates, to a subset of the digits of the hands. Specifically, it is the mapping which takes specific keys to the digits which can activate them.

Since the keys of a virtual key pad are in one-to-one correspondence with their coordinates, this disclosure treats the keys and coordinates as equivalent and speaks of them interchangeably. These are called virtual keys.

The digits of the human hand may be put in one-to-one correspondence with any set of abstract objects such as integers or symbols. Digits so represented are called virtual digits, and this disclosure treats them as equivalent to those of the hand.

A virtual row of a virtual finger key pad is a subset of virtual keys of that pad having the same first coordinate. A virtual column is a subset having the same second coordinate.

Dedicated key pads are key pads each of whose key has a single function and which emits codes of a single type when pressed. Dedicated key pads cannot be overlapped, and are to be contrasted with overlapped key pads.

## Characters, Fases and Character Sets

Characters are symbols or codes for symbols. They may or may not be displayable or printable. In this disclosure, the term "displayable" will be used to include "printable" when appropriate. Characters may be represented by integers or equivalently by unique representations of integers. An example of a method of representing integers, and hence characters, is the storage of bit patterns in word processing machines.

Displayable, or printable characters represent symbols which can be printed or displayed. This presupposes conventions which the display device or printer obeys. Examples of displayable characters include the letters of an alphabet, the numerals, punctuation marks, mathematical symbols, and graphics symbols.

Non-displayable, or non-printable characters are codes which the display device or printer interprets as commands to perform actions other than displaying a symbol, or which carry information not intended to be displayed. Examples include cursor movement commands, function key codes, commands to make audible sounds, and the end-of-file mark.

A fase is a coherent and interrelated set of symbols; the word "fase" is an amalgamation of the words "font" and "case". Examples include:

- the set of letters of an alphabet
- the set of lower case letters of an alphabet
- the set of upper case letters of an alphabet
- the set of punctuation marks associated with an alphabet
- the set of numerals, mathematical operators, and mathematical punctuation marks
- the set of graphics characters displayable by a particular display device
- the set of cursor control commands which a particular display device will respond to
- the set of function key codes
- the set of miscellaneous characters which do not fit conveniently into another fase (here, the interrelation involves not fitting into any other fase).

Note that fases need not be mutually exclusive; they may have characters in common.

The precise extent of a particular fase is merely a convention, best represented as a list. Different physical keyboards/displays may have corresponding fases which are identical, which differ superficially, or which differ substantially. For a given keyboard/display, the fases taken as a whole define the set of displayable characters and commands.

For the purpose of this disclosure, the space character is included in the lower case alphabet, in the upper case alphabet, and as a punctuation character.

A fase enumeration is a one-to-one correspondence between the symbols of a fase and a set of positive integers. the one-to-one correspondence allows the symbols and integers to be used interchangeably. This disclosure will do so when appropriate.


Fase Key Pads and Fase Selection Key Pads

A fase key pad is the set of keys of a virtual finger key pad corresponding to part of a given fase, taken in conjunction with the fase state. The fase state is a particular state of the keyboard, or of the device which is receiving the characters, which selects the corresponding fase the virtual keys currently represent. A fase may be distributed over several virtual key pads.

For example, in a standard QWERTY keyboard, the lower case letters consitute one fase while the upper case letters constitute a separate fase.

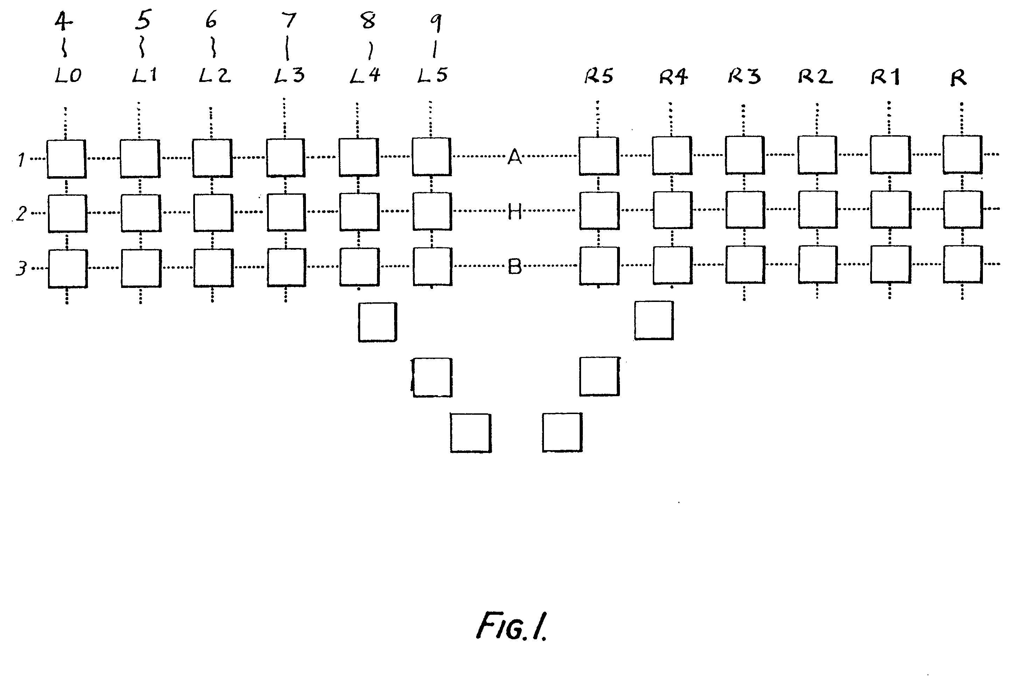

A split fase key pad is a fase key pad in which the virtual key pad has been split into left-hand and right-hand halves. In this disclosure, the virtual coordinate systems for the two key pads will be handled symmetrically, and the column coordinates will be ordered pairs whose first coordinate identifies the hand and whose second coordinate identifies the column within the hand. Figure 1, Split Fase Key Pad Co-ordinate Systems, illustrates this.

Fase key pads can overlap, and it is this fact which requires that the fase state be taken into account. That is, a given virtual finger key can represent several different characters from different fases at different points in time. The fase state is what allows the different characters to be distinguished. Depending on the conventions set up by the keyboard designer, the fase state is determined either by the combination of virtual thumb keys being pressed at the time of a particular key stroke, or by the last combination of virtual thumb keys pressed before that key stroke. It is possible, though usually awkward, to mix these two conventions.

Code-generation keys are virtual keys which cause the keyboard to generate the code for a character when they are pressed, either separately or in conjunction with a fase selection. The virtual keys of a virtual finger key pad are for the most part best utilized as code-generation keys.

Fase selection keys are keys which when pressed separately or in combination select or establish the fase which the code-generation keys of a virtual key pad represent. As just indicated, the invention disclosed herein uses virtual thumb keys for fase selection keys. (There is one exception: the (alt), (ctrl) and (esc) finger keys of the QWERTY emulation may be interpreted to be fase selection keys by some software).

The term "shift key" will be used in this disclosure as synonymous with "fase selection key".

A fase selection keypad is a one-dimensional array of fase selection keys.

Mathematically, a fase key pad corresponds to the set of all ordered pairs whose first coordinate is a fase state and whose second coordinate is a virtual finger key. This is equivalent to an ordered triple whose first coordinate is the fase state, whose second coordinate is the first coordinate of the virtual key and whose third coordinate is the second coordinate of the virtual key. that is, The ordered pair $\langle fs, \langle c1, c2 \rangle \rangle$ is equivalent to the ordered triple $\langle fs, c1, c2 \rangle$. So a fase key pad can be mathematically described as being the set of all such ordered triples.

A fase key is such a triple, that is, an element of a fase key pad. Equivalently, it is an ordered pair of a fase state and a virtual finger key. A fase key pad mapping, or fase mapping for short, is a mapping taking a subset of a fase key pad to a character set.

## Virtual Keyboards and Product Keyboards

A virtual keyboard is a collection of fase mappings.

Product keyboards are keyboards which use fase selection keys to determine the fase states and hence the fases of the code-generation keys. Their name derives from the number of characters which can be encoded by such a method, which is the product of the number of fase states and the number of code generation keys. Product keyboards have the property that a great many characters can be encoded with very few keys.

A pure product keyboard is one in which the codes generated by every code generating key depend on the fase state in effect at the time the key is pressed.

## Home Position and Proximal Keyboards

Experience has shown that the most efficient keyboards assign a home position to the four fingers of each hand, and assign the most frequently struck characters to the virtual keys occupying the home positions. Since the tips of the fingers of a relaxed human hand form a roughly straight or slightly curved line, these correspond to four consecutive keys of the home row of the corresponding virtual finger key pad.

A home position proximal keyboard, or proximal keyboard for short, is one whose virtual finger key pads contain a virtual key next to each of the four home position keys, both immediately above and below, immediately to the left and to the right, and at each of the four adjacent diagonal positions. The virtual finger key pads of a proximal keyboard are called proximal keypads.

In other words, a proximal keypad must contain, in addition to the four home position keys:
- one key on the home row adjacent to the little finger key
- one key on the home row adjacent to the index finger key, yielding a minimum total of six keys on the home row
- six keys on the row above the home row
- six keys on the row below the home row

Every proximal keypad must have at least three rows of six keys, forming a 3x6 keypad.

The border keys of a proximal keypad are defined to be the fourteen keys other than the home position keys.

The miniprox keypad is defined herein to be the minimum proximal keypad, which is necessarily a 3x6 virtual keypad. It contains the home position keys, the border keys, and no others. It has the property that every finger strokes only keys in home position or immediately adjacent to it.

A miniprox keyboard is one having a miniprox keypad for each hand, and having for each thumb a fase selection keypad with at least two fase keys. Fase selection keypads with up to five keys are feasible.

For both hands, the outer border column of a miniprox keyboard is column 0; column 1 is the home column for the little finger; column 2 is the home column for the ring finger; column 3 is the home column for the middle finger; column 4 is the home column for the forefinger; and column 5 is the inner border column.

Two virtual columns of a miniprox keyboard are symmetric whenever they have the same column number and are on opposite hands.

The choice virtual finger keys of a miniprox keyboard are ranked in the following priority: the choicest keys are the home position keys, the next most choice keys are the keys of the inner column, which can be struck by the index finger, and the next most choice keys are the keys in the row. Above the three middle home position keys. Thus there are ten choice keys.

Forefingered Keyboard

A forefingered space keyboard is defined herein to be a virtual keyboard in which the space key is assigned to the home position of either of the forefingers on any fase key pad.

A forefingered cursor keyboard is defined herein to be a virtual keyboard in which any cursor control key is assigned to the home position of either of the forefingers on any fase key pad.

A forefingered cursor/space keyboard is defined to be a forefingered cursor keyboard which is also a forefingered space keyboard.

An integrated forefingered cursor/space keyboard is defined to be one in which the home position key for the left forefinger is assigned to the space character for both the lower case and upper case alphabetic fases, and is also assigned to the cursor-left-one-character cursor control key in the cursor control fase.

Balance

A pair of characters is an unordered set of two characters which complement each other in some fashion. Unquoted examples include:

( )
⟨ ⟩
[ ]
; :
, .
(up-arrow) and (down-arrow)
(left-arrow) and (right-arrow).

Pairs of characters should be assigned to the same fase unless there is a very good reason for not doing so. This allows the design of the fase to be balanced.

Two virtual finger columns of a miniprox keyboard are defined to be bilaterally symmetric if they are the columns assigned to the home positions of corresponding left and right hand virtual fingers, or if they are assigned to border columns adjacent to corresponding left and right hand virtual keys.

Two virtual finger keys of a miniprox keyboard are defined to be in bilateral balance if they are in the same virtual row and in bilaterally symmetric columns.

A pair of characters is said to be bilaterally balanced if they are assigned to virtual finger keys in bilateral balance, that is, to symmetric virtual columns of the same virtual rows. Thus they will occupy positions symmetric with respect to the center of the keyboard.

For example, the left parenthesis might be placed at the left little finger home position and the right parenthesis might be placed at the home position for the right little finger, both in the lower case alphabetic fase. Then they would be bilaterally balanced.

A bilaterally balanced fase key pad is one in which a substantial portion of the character pairs are in bilateral balance.

Two virtual columns of a miniprox keyboard are defined to be in unilateral horizontal symmetry if they are symmetric about the middle finger column, column 3. Thus the ring finger and forefinger columns, columns 2 and 4, are in unilateral horizontal balance, as are the little finger and inner border columns, columns 1 and 5. The middle finger column, column 3, is defined to be unilaterally horizontally symmetric with itself.

Two virtual finger keys are said to be in unilateral horizontal balance if they are in the same virtual row of the same hand and are situated in virtual columns symmetric about the column for the home position for the middle finger.

Two virtual finger keys are said to be in unilateral vertical balance if they are in the same virtual column of the same hand and are situated one in the virtual row above the home row and the other in the row below.

Two virtual finger keys are said to be in unilateral balance if they are in either unilateral horizontal balance or in unilateral vertical balance.

A pair of characters is said to be unilaterally balanced if they belong to the same fase and are assigned to virtual finger keys which are in unilateral balance.

For example, if the left and right parentheses were assigned to the home positions for the ring and forefingers of the right hand on the numeric fase, respectively, they would be unilaterally balanced.

EP 0 201 294 B1

A unilaterally balanced fase key pad is one in which a substantial portion of the character pairs are in unilateral balance.

Integration of Fases

A crucial aspect of the art of keyboard design, heretofore ignored, lies in integrating the assignment of characters to fase key pads in such a way as to optimize several potentially conflicting goals:
- grouping the characters belonging to one fase in the same fase key pad
- grouping the characters belonging to related fases to the same fase key pad, that is, amalgamating the fases
- choosing between unilateral and bilateral balance as the design constraint for a given fase
- balancing pairs of characters within a fase or within an amalgamated fase.

An integrated fase keyboard is a product keyboard in which the overlapped fases have been integrated so that they work well together. When designed properly, a pronounced synergistic efficiency will be produced. One of the ways this can show up is as a reduced mental burden associated with switching from fase to fase.

Polyfase conflict, or clash, is the assignment of identical, similar or related characters to different virtual keys. An example would be assignments of the alphabetic 'period' and the numeric 'decimal point' to different virtual finger keys of the QWERTY emulation of this disclosure.

Two fases of a keyboard are said to be integrated to the extent that they avoid clashes.

Intrafase integration is the avoidance of clashes of characters within a fase. Interfase integration is the avoidance of clashes in the assignments of characters of different fases.

Keyboard Transparency

A tool is said to be transparent to the extent that the user can operate it without having any attention on it.

Transparent design is the art of design of tools which do not distract the user from his initial purpose.

Conscious attention is the diversion of the mental faculties or senses to tasks which cannot be performed automatically, but require some form of thought, recollection, association or reasoning power, or some form of aware sensation.

Unconscious attention is the diversion of the mental faculties or the senses in a way which requires no strenuous thought, recollection, association or reasoning power and no aware sensation but can be performed more or less automatically.

Gross hand motion is motion of one or both hands to or from home position for the fingers, or motion of the hand as a whole while away from home position.

Eye distraction is the phenomenon that occurs as a result of the user having to move his hands from home position and then return them. It is necessary that he use his eyes at the end of each move to make sure that his fingers are placed on the keys he intends to press without pressing any keys he doesn't.

Finger distraction is the effect caused when a key must be struck far from the home position of the finger which must strike it, so that some of the other fingers of that hand must be pulled off their home positions.

According to the present invention there is a keyboard comprising a plurality of keys and a plurality of data fonts, the keys being arrayed into two groups, the keys of the first group being operable by the fingers of an operator and the keys of the second group being operable by the thumbs of the operator, each key of the first group being associated with a plurality of different items of data all of which are in different fonts, characterised in that each data font is associated with a different key of the second group whereby operation of a key in the second group selects the data font to be used and operation of the keys of the first group causes the data associated with each of said operated keys of the first group and contained in the selected font to be generated.

A key board embodying the invention will now be described by way of example with reference to the accompanying diagrammatic drawings in which:

Figure 1 is a conceptual top view of the Miniprox keyboard which includes the finger key pads, the thumb key pads, and, since the Miniprox keyboard is a virtual keyboard, coordinate systems for each;

Figure 2 is a schematic diagram depicting the assignments of the virtual digits to the virtual keys of the Miniprox keyboard;

Figure 3 is a top view of a typical physical implementation of the Miniprox keyboard with central touch - sensitive grid for the input of continuously variable analog information and an emulation mode selection

7

switch, the latter illustratively depicted as allowing for the selection of Qwerty, Exemplary and Dvorak-Dealey emulation modes;

Figure 4 is a top view of a unilaterally balanced, full QWERTY emulation on a Miniprox keyboard, including the alphabetic, cursor, numeric and function fases; and

Figure 5 is a top view of a Bilaterally Balanced, Fully Integrated Dvorak Emulation on a Miniprox keyboard, including the two alphabetic fases, and the numeric, function, deletion, and complementary cursor and command fases.

## The Miniprox Coordinate System

Figure 1 shows a "top view" of the (virtual) miniprox coordinate system, and indicates the rough relative positions the keys in the three rows and six columns of any physical implementation will hold.

The three rows of the miniprox finger key pads are labelled 'H', 'A' and 'B' for the Home row, the row Above and the home row and the row Below the home row. The rows are sometimes referred to in this document as the Home row, the Above row and the Below row. In any physical implementation of a Miniprox keyboard, the Below row should lie closest to the user and the Above row should lie farthest from the user.

The home position keys of each of the four fingers of each hand occupy the four middle columns of the Home row.

For both hands, the six columns are labelled on the basic of the positions of the home positions of the fingers. Column 1 contains the home position of the little finger; Column 2 contains the home position of the ring finger; Column 3 contains the home position of the middle finger and column 4 contains the home position of the index finger (or forefinger). Column 0 is the outer border column; in any physical implementation it will be the column farthest from the center of the keyboard. Column 5 is the inner border column, and in any physical implementation it will be the column closest to the finger key pad for the opposite hand.

In order to uniquely specify the virtual coordinates of a virtual key, it is necessary and sufficient to specify the row (A, H or B), the column (0,1,2,3,4 or 5) and the hand (L or H). For instance, the home position for the left index finger is at LH4, and that of the right little finger is at RH1. The upper left hand corner of the right finger pad is at RA5 and the lower right hand corner of the right finger pad is at RBO. The respective keys are denoted [RA5] and [RBO].

The thumb keys are assigned coordinates as if they constituted a separate column, the 'T' column, having a Home key, an Above key and a Below key. Thus the home position left thumb key is at LHT, and the key itself is denoted [LHT].

## The Central Touch-Sensititve Pad

In addition to the disclosure of the two keyboards, a stated object of this invention is to facilitate the entry of analog motion and position information in a fashion which does not disrupt the user's kinesthetic memory of the home finger positions, so that the user can interrupt text entry, perform the analog input, and return his hands to home position without diverting his eyes to the keyboard.

This can be done, either as a standard component of any split fase key pad keyboard, or as an optional capability, by the inclusion of a touch-sensitive pad filling the space between the finger pads and above, but close to, the thumb pads.

The user enters analog information into the computer in one of two forms: position information or motion information. Position information is entered by touching a particular spot or position of the surface with the tip of either index finger, or both tips. Motion information is entered by moving the tips of one or both fingers across the surface of the pad.

The user naturally establishes a base position for each thumb on the base of the keyboard next to the home position key for that thumb. The displacement of the base position from the home position key is so slight that he can move the thumb back and forth between them with no mental effort, attention or disorientation.

During the use of the pad, he achieves kinesthetic memory of the home position keys by the kinesthetic sense of their relative positions from the base position. This is all natural and transparent. With his thumb resting on the base position, he stretches the tip of either index finger over to touch the surface of the touch sensitive pad.

Restoration of the fingers to home position is accomplished by relaxing the stretched hand. The thumb can easily find its home position.

Since only one fingertip is required to touch the pad, the other hand can remain on its finger pad, keying information in at the same time.

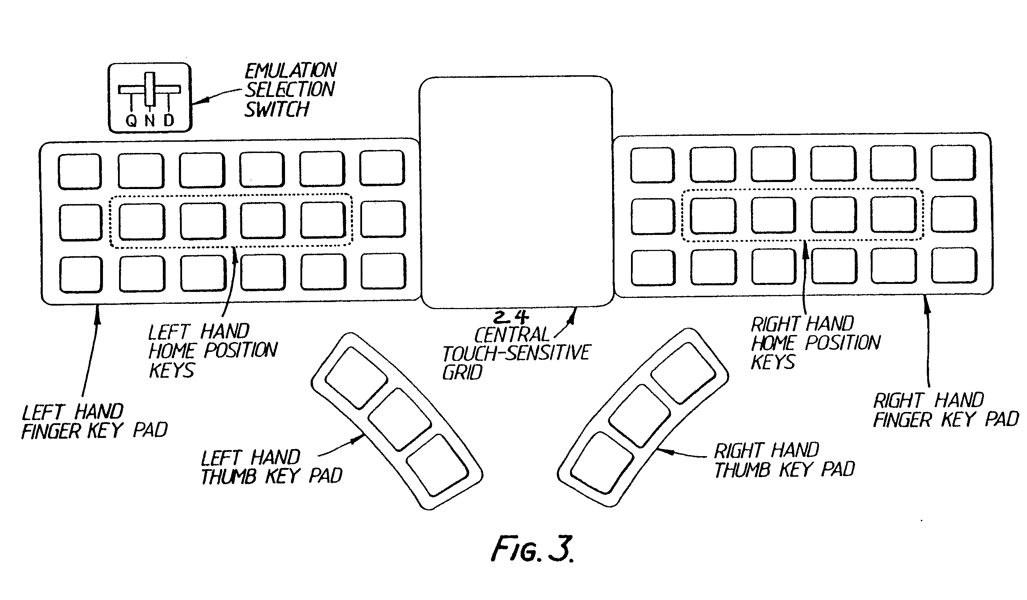

The two virtual product keyboards implementable by the keyboard of Figure 3 collectively meet the objects outlined in the Summary of the invention, and individually they meet the overwhelming majority of objects.

## Central Touch Sensitive Grid

A central touch sensitive grid 24 is provided as a separate feature of the invention from the keyboards.

## Miniprox Keyboard

The virtual Miniprox keyboard is one of the outstanding features of this invention, and has the original and unique configuration of two separate finger key pads as shown in Figure 1, each arranged as three rows, 1,2,3 of six columns 4,5,6,7,8 and 9. The thumb key pads for its preferred embodiment have three keys each.

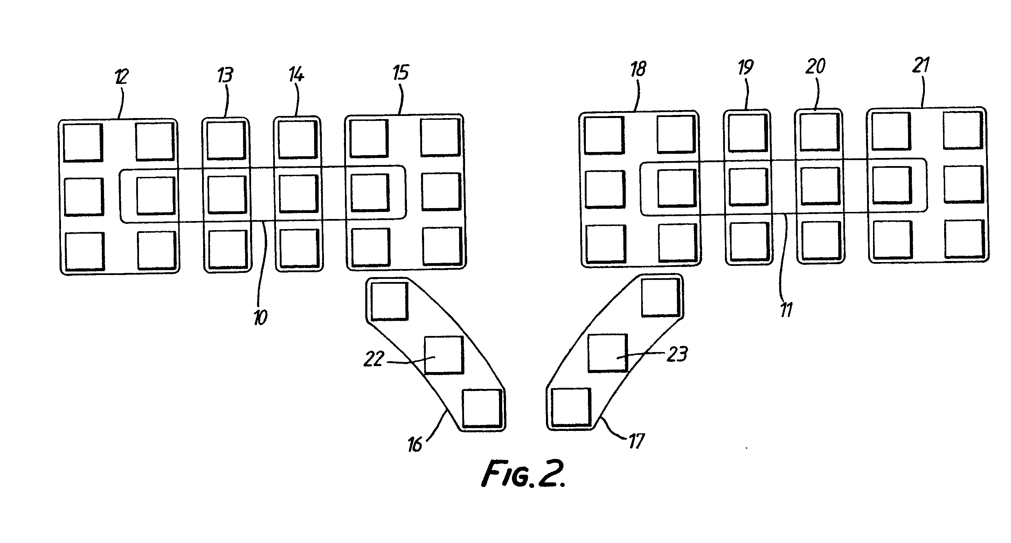

Each of the product keyboards is a Miniprox implementation. The virtual fingers are assigned to the virtual keys of the Miniprox keyboard as shown in Figure 2. The fingers of each hand are assigned home positions on the home position keys of each hand 10, 11. Each of the left hand fingers is assigned a set of virtual keys to strike as outlined in the drawing: the little finger 12, the ring finger 13, the middle finger 14, and the forefinger 15. Similarly for the right hand fingers: forefinger 18, middle finger 19, ring finger 20 and little finger 21.

The left thumb position is the middle key 22 of the left thumb pad 16, and similarly for the right thumb home position 23 of the right thumb pad 17.

## Qwerty Emulation

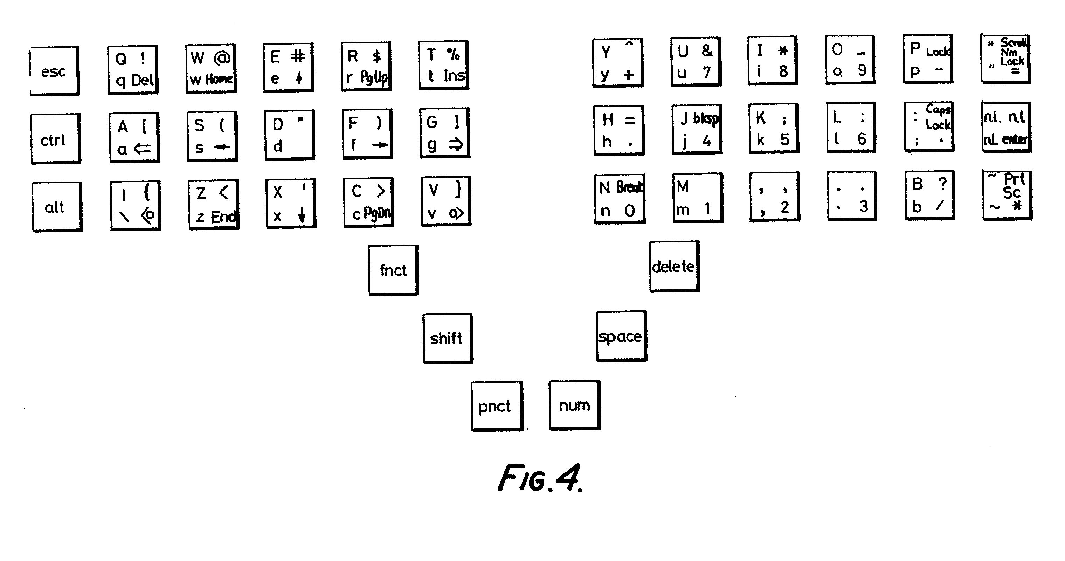

Fase selection and the assignments of characters to virtual keys for the Qwerty emulation are shown in Figure 4. The [shift] fase selection key is assigned to [LHT]. The [space] code generation key is assigned to [RHT]. The [newline] code generation key is assigned to [RHO].

The [esc] code generation key is assigned to [LAO]. The [ctrl] code generation key is assigned to [LHO]. The [alt] code generation key is assigned to [LBO].

The [fnct] fase selection key is assigned to [LAT]; it establishes the cursor fase for the left hand and the function fase for the right. The [delete] fase selection key is assigned to [RAT]. The [pnct] fase selection key is assigned to [LBT]. The [num] fase selection key is assigned to [RBT].

## Descriptions of the Qwerty Fase Mappings

The Qwerty emulation has seven fases, and each is precisely defined by a table giving the virtual coordinates of the characters of the fase, in conjunction with an indication of the combination of fase keys that establishes it.

Table 1 defines the key assignments of the unshifted fase.
Table 2 defines the key assignments of the shifted fase.
Table 3 defines the key assignments of the function fase.
Table 4 defines the key assignments of the numeric fase.
Table 5 defines the key assignments of the cursor fase.
Table 6 defines the key assignments of the deletion fase.
Table 7 defines the key assignments of the punctuation fase.

Table 1. Qwerty unshifted alphabetic fase:
established by pressing no fase selection key

**left hand:**

|        | L0   | L1 | L2 | L3 | L4 | L5      |
|--------|------|----|----|----|----|---------|
| Above  | Esc  | q  | w  | e  | r  | t       |
| Home   | Ctrl | a  | s  | d  | f  | g       |
| Below  | Alt  | \  | z  | x  | c  | v       |

**right hand:**

|        | R5 | R4 | R3 | R2 | R1 | R0      |
|--------|----|----|----|----|----|---------|
| Above  | y  | u  | i  | o  | p  | "       |
| Home   | h  | j  | k  | 1  | ;  | newline |
| Below  | n  | m  | ,  | .  | b  | ~       |

[space] is assigned to [RHT].

Table 2. Qwerty shifted alphabetic fase:
established by pressing [shift] key at [LHT].

**left hand:**

|        | L0   | L1 | L2 | L3 | L4 | L5 |
|--------|------|----|----|----|----|----|
| Above  | Esc  | Q  | W  | E  | R  | T  |
| Home   | Ctrl | A  | S  | D  | F  | G  |
| Below  | Alt  | !  | Z  | X  | C  | V  |

**right hand:**

|        | R5 | R4 | R3 | R2 | R1 | R0      |
|--------|----|----|----|----|----|---------|
| Above  | Y  | U  | I  | O  | P  | "       |
| Home   | H  | J  | K  | L  | :  | newline |
| Below  | N  | M  | ,  | .  | B  | ~       |

[space] is assigned to [RHT]

Table 3. Qwerty function fase:
established by pressing [fnct] key at [LAT].

left hand:

|        | L0  | L1  | L2  | L3  | L4  | L5  |
|--------|-----|-----|-----|-----|-----|-----|
| Above  | Esc |     |     |     |     |     |
| Home   | Ctrl|     |     |     |     |     |
| Below  | Alt |     |     |     |     |     |

right hand:

|        | R5  | R4  | R3  | R2  | R1  | R0  |
|--------|-----|-----|-----|-----|-----|-----|
| Above  |     | F7  | F8  | F9  |     |     |
| Home   |     | F4  | F5  | F6  |     |     |
| Below  | F0  | F1  | F2  | F3  |     |     |

Table 4. Qwerty numeric fase:
established by pressing [num] key at [RBT].

left hand:

|        | L0  | L1  | L2  | L3  | L4  | L5  |
|--------|-----|-----|-----|-----|-----|-----|
| Above  | Esc |     |     |     |     |     |
| Home   | Ctrl|     |     |     |     |     |
| Below  | Alt |     |     |     |     |     |

right hand:

|        | R5  | R4  | R3  | R2  | R1  | R0    |
|--------|-----|-----|-----|-----|-----|-------|
| Above  | +   | 7   | 8   | 9   | –   | =     |
| Home   | .   | 4   | 5   | 6   | .   | enter |
| Below  | 0   | 1   | 2   | 3   | /   | *     |

Table 5. Qwerty cursor fase:
established by pressing [fnct]key at [LAT].

left hand:

|        | L0  | L1   | L2   | L3    | L4   | L5   |
|--------|-----|------|------|-------|------|------|
| Above  | Esc | Del  | Home | UpArw | PgUp | Ins  |
| Home   | Ctrl| RWrd | RCol |       | LCol | LWrd |
| Below  | Alt | TabL | End  | DnArw | PgDn | TabR |

right hand:

|        | R5  | R4  | R3  | R2  | R1  | R0  |
|--------|-----|-----|-----|-----|-----|-----|
| Above  |     |     |     |     |     |     |
| Home   |     |     |     |     |     |     |
| Below  |     |     |     |     |     |     |

Table 6. Qwerty deletion fase:
established by pressing [delete] key at [RAT].

**left hand:**

|       | L0   | L1   | L2   | L3    | L4   | L5   |
|-------|------|------|------|-------|------|------|
| Above | Esc  |      |      | UArrw |      |      |
| Home  | Ctrl | RWrd | RChr |       | LChr | LWrd |
| Below | Alt  |      |      | DArrw |      |      |

**right hand:**

|       | R5 | R4 | R3 | R2 | R1 | R0 |
|-------|----|----|----|----|----|----|
| Above |    |    |    |    |    |    |
| Home  |    |    |    |    |    |    |
| Below |    |    |    |    |    |    |

Table 7. Qwerty punctuation fase:
established by pressing [pnct] key at [LBT].

**Left hand:**

|       | L0   | L1 | L2 | L3 | L4 | L5 |
|-------|------|----|----|----|----|----|
| Above | Esc  | !  | @  | #  | $  | %  |
| Home  | Ctrl | [  | (  | "  | )  | ]  |
| Below | Alt  | {  | <  | >  | >  | }  |

**right hand:**

|       | R5    | R4   | R3 | R2 | R1   | R0      |
|-------|-------|------|----|----|------|---------|
| Above | ^     | &    | *  | _  | NmLk | ScLk    |
| Home  | -     | bksp | ;  | :  | CpLk | newline |
| Below | Break |      | ,  | .  | ?    | PrtSc   |

The Dvorak Emulation Keyboard

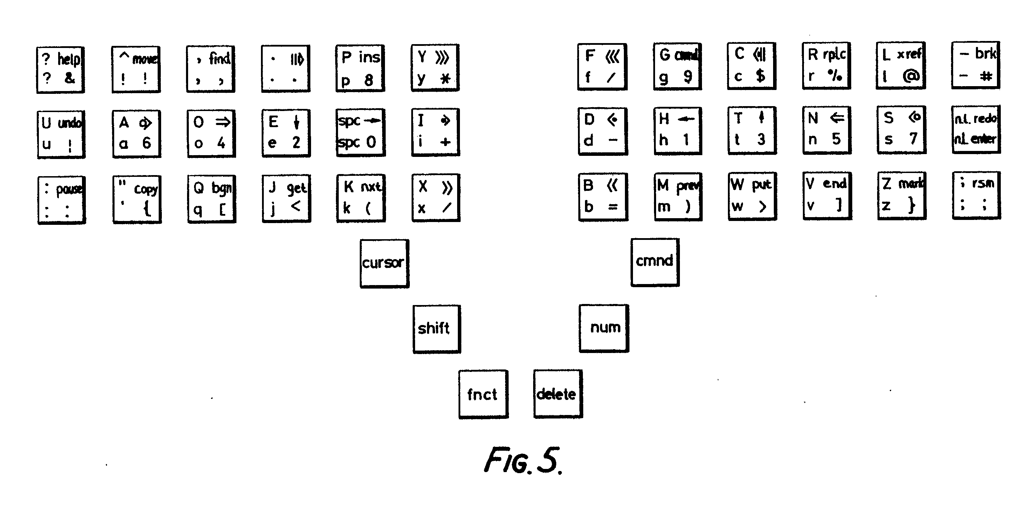

The assignments of characters to virtual keys for the Dvorak emulation keyboard, as well as the assignments of fase selection keys to virtual keys are shown in Figure 5.

For the Dvorak emulation keyboard, the fases are established as follows: the unshifted alphabetic fase by default (pressing no thumb key), the shifted alphabetic fase by pressing [LHT], the numeric fase by pressing [RHT], the function fase by pressing [fnct] at [LBT], the deletion fase by pressing [delete] at [RTB], the cursor fase by pressing [cursor] at [LAT], and the command fase by pressing [cmnd] at [RAT].

Descriptions of the Dvorak Emulation Fase Mappings

Table 8 defines the key assignments of the unshifted alphabetic fase.
Table 9 defines the key assignments of the shifted alphabetic fase.
Table 10 defines the key assignments of the numeric fase.
Table 11 defines the key assignments of the function fase.

Table 12 defines the key assignments of the numeric fase.
Table 13 defines the key assignments of the deletion fase.
Table 14 defines the key assignments of the cursor fase.
Table 15 defines the key assignments of the command fase.

Table 8. Dvorak emulation unshifted alphabetic fase:
established by pressing no fase selection key

### left hand:

|       | L0 | L1 | L2 | L3 | L4    | L5 |
|-------|----|----|----|----|-------|----|
| Above | ?  | !  | ,  | .  | p     | y  |
| Home  | u  | a  | o  | e  | space | i  |
| Below | :  | '  | q  | j  | k     | x  |

### right hand:

|       | R5 | R4 | R3 | R2 | R1 | R0      |
|-------|----|----|----|----|----|---------|
| Above | f  | g  | c  | r  | l  | —       |
| Home  | d  | h  | t  | n  | s  | newline |
| Below | b  | m  | w  | v  | z  | ;       |

Table 9. Dvorak emulation shifted alphabetic fase:
established by pressing [shift] at [LHT].

### left hand:

|       | L0 | L1 | L2 | L3 | L4    | L5 |
|-------|----|----|----|----|-------|----|
| Above | ?  | ^  | ,  | .  | P     | Y  |
| Home  | U  | A  | O  | E  | space | I  |
| Below | :  | "  | Q  | J  | K     | X  |

### right hand:

|       | R5 | R4 | R3 | R2 | R1 | R0      |
|-------|----|----|----|----|----|---------|
| Above | F  | G  | C  | R  | L  | —       |
| Home  | D  | H  | T  | N  | S  | newline |
| Below | B  | M  | W  | V  | Z  | ;       |

Table 10. Dvorak emulation numeric fase:
established by pressing [num] at [RHT].

### left hand:

|       | L0 | L1 | L2 | L3 | L4 | L5 |
|-------|----|----|----|----|----|----|
| Above | &  | !  | ,  | .  | 8  | *  |
| Home  | /  | 6  | 4  | 2  | 0  | +  |
| Below | :  | {  | [  | <  | (  | /  |

**right hand:**

| | R5 | R4 | R3 | R2 | R1 | R0 |
|---|---|---|---|---|---|---|
| Above | / | 9 | $ | % | ☞ | # |
| Home | _ | 1 | 3 | 5 | 7 | enter |
| Below | = | ) | > | ] | } | ; |

Table 11. Dvorak function fase:

**left hand:**

| | L0 | L1 | L2 | L3 | L4 | L5 |
|---|---|---|---|---|---|---|
| Above | | | | | F8 | |
| Home | | F6 | F4 | F2 | F10 | |
| Below | | | | | | |

**right hand:**

| | R5 | R4 | R3 | R2 | R1 | R0 |
|---|---|---|---|---|---|---|
| Above | | F9 | | | | |
| Home | | F1 | F3 | F5 | F7 | |
| Below | | | | | | |

Table 12. Dvorak numeric fase:

**left hand:**

| | L0 | L1 | L2 | L3 | L4 | L5 |
|---|---|---|---|---|---|---|
| Above | | | | | 8 | |
| Home | | 6 | 4 | 2 | 0 | |
| Below | | | | | | |

**right hand:**

| | R5 | R4 | R3 | R2 | R1 | R0 |
|---|---|---|---|---|---|---|
| Above | | 9 | | | | |
| Home | | 1 | 3 | 5 | 7 | enter |
| Below | | | | | | |

Table 13. Dvorak deletion fase:

**left hand:**

| | L0 | L1 | L2 | L3 | L4 | L5 |
|---|---|---|---|---|---|---|
| Above | | | | | | DEoPg |
| Home | | DTabR | DWrdR | DEoLn | DChrR | DEoDc |
| Below | | | | | | DPrgR |

**right hand:**

|       | R5    | R4    | R3    | R2    | R1    | R0  |
|-------|-------|-------|-------|-------|-------|-----|
| Above | DBoPg |       |       |       |       |     |
| Home  | DBoDc | DChrL | DBoLn | DWrdL | DTabL |     |
| Below | DPrgL |       |       |       |       |     |

Table 14. Dvorak cursor fase:

**left hand:**

|       | L0    | L1    | L2    | L3    | L4    | L5    |
|-------|-------|-------|-------|-------|-------|-------|
| Above |       |       |       | EoDc  |       | DnPg  |
| Home  |       | RTab  | RWrd  | DnLn  | RCol  | EoSn  |
| Below |       |       |       |       |       | EoPrg |

**right hand:**

|       | R5    | R4    | R3    | R2    | R1    | R0  |
|-------|-------|-------|-------|-------|-------|-----|
| Above | UpPg  |       | BoDc  |       |       |     |
| Home  | BoSn  | LCol  | UpLn  | LWrd  | LTab  |     |
| Below | BoPrg |       |       |       |       |     |

Table 15. Dvorak command fase:

**left hand:**

|       | L0    | L1    | L2    | L3    | L4    | L5  |
|-------|-------|-------|-------|-------|-------|-----|
| Above | help  | move  | find  |       | ins   |     |
| Home  | undo  |       |       |       |       |     |
| Below | pause | copy  | bgn   | get   | nxt   |     |

**right hand:**

|       | R5    | R4    | R3    | R2    | R1    | R0   |
|-------|-------|-------|-------|-------|-------|------|
| Above |       | cmnd  |       | rplc  | xref  | brk  |
| Home  |       |       |       |       |       | redo |
| Below |       | prev  | put   | end   | mark  | rsm  |

The keyboards described herein minimize those features which force the operator to divert his or her attention from his primary task onto the keyboard. Concurrently, they still allow high ease of use and high speed of entry in several conflicting varieties of tasks in the entry process. Specifically, the product keyboards are designed to facilitate an arbitrary mix of a diverse range of tasks including but not limited to composition and editing of alphabetic and alphanumeric text, graphic layout of alphabetic and alphanumeric text, entry of alphabetic and alphanumeric text, and the operation of new and pre-existing canned software.

The task of supporting pre-existing software entails providing replacements for the keys needed by the vast diversity of software optimized to interface with a multitude of specific pre-existing keyboards. Each product keyboard allows the emulation of many pre-existing keyboards in a relatively uniform and easy-to-learn fashion. Finally, the product keyboards maximize ease of associative learning by grouping the characters and control codes into related groups.

The miniprox keyboards are a subclass of the product keyboards which eliminate all motion of the fingers across intervening rows, with the exception of motion across the home position row, which can be nearly eliminated by subsequent proper key placement.

The keyboards, described herein allow the operator to easily perform a mixture of tasks in rapid succession without diverting his attention to itself, while concurrently facilitating maximal speed and ease of performance of each of the separate tasks.

The keyboards disclosed provide the user with an ergonomically transparent interface to other equipment, do not divert the attention of the user onto themselves, do not force the user to displace his fingers more than one key from their home positions, and consequently do not force him to divert his eyes to the keyboard.

## Claims

1. A keyboard comprising a plurality of keys and a plurality of data fonts, the keys being arrayed into two groups, the keys of the first group being operable by the fingers of an operator and the keys of the second group being operable by the thumbs of the operator, each key of the first group being associated with a plurality of different items of data all of which are in different fonts, characterised in that each data font is associated with a different key of the second group whereby operation of a key in the second group selects the data font to be used and operation of the keys of the first group causes the data associated with each of said operated keys of the first group and contained in the selected font to be generated.

2. A keyboard according to Claim 1 characterised in that the keys of the first group are arranged in left hand and right hand arrays, four keys in each array being assigned as the home positions for the four fingers of the associated hand, the remaining keys of each array being so positioned around said four keys that the four fingers can operate all the keys of array without any of the fingers being required to move beyond an adjacent key in any direction.

3. A keyboard according to Claim 1 or to Claim 2 characterised in that the keys of the second group are arranged in left and right arrays with one key in each array being assigned as the home position of the thumb, the remaining keys of the array being positioned around said one key so that the thumb can operate all the keys of the array without being required to move beyond an adjacent key in any direction.

4. A keyboard according to any preceding claim characterised in that the said four keys of each array of the first group are configured in a line or curve.

5. A keyboard according to any preceding claim characterised in that the keys of each array of the first group are configured in arrangement of three lines and six columns.

6. A keyboard according to any preceding claim characterised in that the plurality of data fonts include an upper case alphabet letter font, a lower case alphabet letter font, a numeric font, a deletion font, a function font and a cursor motion control font.

7. A keyboard according to any preceding claim characterised in that said second group of keys includes a key for initiating a "space" operation.

## Revendications

1. Clavier comportant une pluralité de touches et une pluralité de sources de données, les touches étant disposées en deux groupes, les touches d'un premier groupe étant actionnables par les doigts d'un opérateur et les touches du second groupe étant actionnables par les pouces de l'opérateur, chaque touche du premier groupe étant associée à une pluralité de différentes sortes de données dont toutes sont dans des sources différentes, caractérisé en ce que chaque source de données est associée à une touche différente du second groupe de sorte que l'actionnement d'une touche du second groupe sélectionne la source de données à utiliser et l'actionnement des touches du premier groupe provoque la création de la donnée associée à chaque touche actionnée du premier groupe et contenue dans la

EP 0 201 294 B1

source sélectionnée.

2. Clavier selon la revendication 2 caractérisé en ce que les touches du premier groupe sont disposées en matrice droite et matrice gauche, quatre touches dans chaque matrice étant attribuées à la position de repos des quatre doigts de la main correspondante, les touches restantes de chaque matrice étant disposées autour desdites quatre touches de sorte que les quatre doigts peuvent actionner toutes les touches de la matrice sans qu'un des doigts soit contraint de bouger au-delà d'une touche voisine dans n'importe quelle direction.

3. Clavier selon la revendication 1 Ou la revendication 2 caractérisé en ce que les touches du second groupe sont disposées en matrices gauche et droite, avec une touche par matrice attribuée à la position de repos du pouce, les touches restantes de la matrice étant disposées autour de cette touche de sorte que le pouce peut actionner toutes les touches de la matrice sans être contraint de bouger au-delà d'une touche voisine dans n'importe quelle direction.

4. Clavier selon l'une quelconque des revendications précédentes, caractérisé en ce que lesdites quatre touches de chaque matrice du premier groupe sont disposées le long d'une ligne ou d'une courbe.

5. Clavier selon l'une quelconque des revendications précédentes, caractérisé en ce que les touches de chaque matrice du premier groupe sont disposées dans un arrangement de trois lignes et six colonnes.

6. Clavier selon l'une quelconque des revendications précédentes, caractérisé en ce que la pluralité des sources de données comprend une police de lettres de l'alphabet majuscules, une police de lettres de l'alphabet minuscules, une police numérique, une source d'effacement, une source fonction et une source de commande du mouvement de curseur.

7. Clavier selon l'une quelconque des revendications précédentes, caractérisé en ce que ledit second groupe de touches comporte une touche pour activer une opération "espace".

Patentansprüche

1. Eingabetastatur mit einer Vielzahl von Tasten und einer Vielzahl von Zeichensätzen, wobei die Tasten in zwei Gruppen angeordnet sind, die Tasten der ersten Gruppe von den Fingern eines Benutzers und die Tasten der zweiten Gruppe von den Daumen des Benutzers bedienbar sind, und jede Taste der ersten Gruppe mit einer Vielzahl von verschiedenen Datenzeichen zugeordnet sind, die alle in verschiedenen Zeichensätzen enthalten sind, **dadurch gekennzeichnet**, daß jeder Zeichensatz einer anderen Taste der zweiten Gruppe zugeordnet ist, wobei durch die Bedienung einer Taste in der zweiten Gruppe der zu benutzende Zeichensatz auswählbar ist und die Bedienung der Tasten der ersten Gruppe bewirkt, daß die jeder der besagten bedienten Tasten der ersten Gruppe zugeordneten und in dem ausgewählten Zeichensatz enthaltenden Datenzeichen generiert werden.

2. Eingabetastatur nach Anspruch 1, dadurch gekennzeichnet, daß die Tasten der ersten Gruppe in linke-Hand und rechte-Hand Matrizen angeordnet sind, wobei vier Tasten in jeder Matrix als Ausgangspositionen für die vier Finger der zugeordneten Hand zugewiesen sind und die verbleibenden Tasten jeder Matrix derart um diese vier Tasten angeordnet sind, daß die vier Finger alle Tasten der Matrix bedienen können, ohne daß irgendeiner der Finger über eine benachbarte Taste hinaus in irgendeine Richtung bewegt werden müßte.

3. Eingabetastatur nach Anspruch 1 oder nach Anspruch 2, dadurch gekennzeichnet, daß die Tasten der zweiten Gruppe in linke und rechte Matrizen angeordnet sind, wobei jeweils eine Taste in jeder Matrix als Ausgangsposition für den Daumen ausgewiesen ist und die verbleibenden Tasten der Matrix derart um diese eine Taste angeordnet ist, so daß der Daumen alle Tasten der Matrix bedienen kann, ohne daß er über eine benachbarte Taste hinaus in irgendeine Richtung bewegt werden müßte.

4. Eingabetastatur nach einem der vorstehenden Ansprüche, dadurch gekennzeichnet, daß die vier Tasten jeder Matrix der ersten Gruppe in einer Zeile oder einer gebogenen Linie angeordnet sind.

5. Eingabetastatur nach einem der vorstehenden Ansprüche, dadurch gekennzeichnet, daß die Tasten

17

jeder Matrix der ersten Gruppe in einer Anordnung von drei Zeilen und sechs Spalten ausgerichtet sind.

6. Eingabetastatur nach einem der vorstehenden Ansprüche, dadurch gekennzeichnet, daß die Vielzahl der Zeichensätze einen Großbuchstabenzeichensatz, einen Kleinbuchstabenzeichensatz, einen numerischen Zeichensatz, einen Löschzeichensatz, einen Funktionszeichensatz und einen Schreibmarkenbewegungszeichensatz enthält.

7. Eingabetastatur nach einem der vorstehenden Ansprüche, dadurch gekennzeichnet, daß die besagte zweite Tastengruppe eine Taste zur Ausgabe der "Leertasten"-Funktion umfaßt.

Fig. I.

FIG.2.

EMULATION
SELECTION
SWITCH

Q N D

LEFT HAND
HOME POSITION
KEYS

24
CENTRAL
TOUCH-SENSITIVE
GRID

RIGHT HAND
HOME POSITION
KEYS

LEFT HAND
FINGER KEY PAD

LEFT HAND
THUMB KEY PAD

RIGHT HAND
THUMB KEY PAD

RIGHT HAND
FINGER KEY PAD

FIG. 3.

FIG. 4.

| ? help | ^ move | , find | · ‖▷ | P ins | Y ⟫⟩ |
|---|---|---|---|---|---|
| ? & | ! ¡ | , , | . . | p 8 | y ✳ |

| U undo | A ⟡ | O ⇒ | E ↓ | spc → | I ⟡ |
|---|---|---|---|---|---|
| u ¦ | a 6 | o 4 | e 2 | spc 0 | i + |

| : pause | " copy | Q bgn | J get | K nxt | X ⟫ |
|---|---|---|---|---|---|
| : . | ' { | q [ | j < | k ( | x / |

| F ⟪⟨ | G cmd | C ⟨‖ | R rplc | L xref | − brk |
|---|---|---|---|---|---|
| f / | g 9 | c $ | r % | l @ | − # |

| D ⟨ | H ← | T ↓ | N ⇐ | S ⟨◌ | n.l. redo |
|---|---|---|---|---|---|
| d − | h 1 | t 3 | n 5 | s 7 | n.l. enter |

| B ⟪ | M prev | W put | V end | Z mark | ; rsm |
|---|---|---|---|---|---|
| b = | m ) | w > | v ] | z } | ; : |

cursor

cmnd

shift

num

fnct

delete

*FIG. 5.*